# FASCICULE DE BREVET EUROPEEN

(11) **EP 2 104 937 B1**
(45) Date de publication et mention de la délivrance du brevet: **23.05.2012**
(21) Numéro de dépôt: 07857999.2
(22) Date de dépôt: 20.12.2007
(51) Int. Cl.: G11B 27/031, G11B 27/28, G11B 27/34, G11B 27/10, G06F 17/30

(54) **PROCEDE DE CREATION D'UN NOUVEAU SOMMAIRE D'UN DOCUMENT AUDIOVISUEL COMPORTANT DEJA UN SOMMAIRE ET DES REPORTAGES ET RECEPTEUR METTANT EN OEUVRE LE PROCEDE**
VERFAHREN ZUR ERZEUGUNG EINER NEUEN ZUSAMMENFASSUNG EINES AUDIOVISUELLEN DOKUMENTS, DAS BEREITS EINE ZUSAMMENFASSUNG UND MELDUNGEN ENTHÄLT, UND EMPFÄNGER, DER DAS VERFAHREN IMPLEMENTIEREN KANN
METHOD FOR CREATING A NEW SUMMARY OF AN AUDIOVISUAL DOCUMENT THAT ALREADY INCLUDES A SUMMARY AND REPORTS AND A RECEIVER THAT CAN IMPLEMENT SAID METHOD

(30) Priorité: 21.12.2006 FR 0655803
(43) Date de publication de la demande: 30.09.2009
(73) Titulaire: Thomson Licensing, 92130 Issy-les-Moulineaux (FR)
(72) Inventeur: CHEVALLIER, Louis, 35520 La Meziere (FR); DEMARTY, Claire-Hélène, 35520 La Meziere (FR); OISEL, Lionel, 35137 La Nouaye (FR)
(74) Mandataire: Browaeys, Jean-Philippe
(86) Numéro de dépôt international: PCT/EP2007/064380
(87) Numéro de publication internationale: WO 2008/074877

(56) Documents cités:
- EP-A- 1 262 884
- WO-A-2005/062610
- US-A1- 2004 181 545
- US-A1- 2005 193 408
- US-A1- 2006 107 289

## Description

L'invention concerne un procédé de création d'un nouveau sommaire d'un document audiovisuel comportant un sommaire initial et des reportages, et un récepteur mettant en oeuvre le procédé,

De nos jours, de nombreux appareils permettent la réception et la reproduction d'oeuvres audiovisuelles enregistrées. Récemment, des disques durs de grande capacité ont été intégrés à ces récepteurs audiovisuels ; on peut ainsi y stocker des contenus téléchargés soit d'un réseau de diffusion unidirectionnel, soit d'un réseau point à point (Internet par exemple). Parmi ces appareils, les PVR (acronyme de Personal Video Recorder) sont généralement dotés d'un Guide Electronique de Programme (EPG en abrégé) qui permettent à un utilisateur d'afficher les contenus enregistrés dans le disque dur et de les reproduire à l'aide d'une commande. Aujourd'hui, la taille des disques durs permet de stocker plus de 200 heures de programmes. Cette quantité d'information disponible nécessite l'ajout de nouvelles fonctionnalités dans les PVR permettant une navigation inter et intra document rapide. L'EPG permet de regrouper les documents selon de nombreux critères et de les présenter par groupes, par exemple : le thème, le type, la langue, le contrôle parental, etc. La classification s'effectue à l'aide de métadonnées associées au contenu audiovisuel. Selon une variante, le récepteur analyse le contenu et est capable de le classifier. Un autre exemple de moyen de stockage concerne les magnétoscopes qui enregistrent les oeuvres audiovisuelles sur des bandes magnétiques, dans ce cas l'accès au contenu audiovisuel est séquentiel. Sur ces produits, il est possible, soit d'enregistrer immédiatement la vidéo en cours de réception sur le canal courant, soit de programmer un événement à venir. Quelle que soit la façon de mémoriser le contenu, l'interface utilisateur permet de contrôler la sélection et la lecture des oeuvres téléchargées et enregistrées. Dans un premier temps, l'utilisateur sélectionne à l'aide d'un guide de programmes l'émission qu'il désire visualiser. Puis, en appuyant sur la touche « lecture » il déclenche la visualisation de l'oeuvre.

Dans le cas d'enregistrements numériques (par exemple : un DVD), l'oeuvre est segmentée en plusieurs chapitres. De cette façon, l'utilisateur peut choisir un chapitre et commencer la visualisation au début du chapitre sélectionné. En appuyant sur la touche « Plage suivante » la visualisation saute au segment suivant. Certaines émissions reçues par un réseau de diffusion sont également segmentées, de sorte que, une fois enregistrées dans le disque dur du récepteur, l'utilisateur peut sélectionner un segment précis pour le visualiser ou naviguer d'un segment à un autre en ne visualisant que les premières secondes pour rechercher le segment désiré. Si l'émission est reçue non segmentée, il existe des procédés de segmentation permettant de le faire au niveau du récepteur, la demande de brevet référencée FR02.13977 déposée en France le 28 octobre 2002 décrit un procédé de segmentation qui exploite le contenu audiovisuel de l'oeuvre pour en extraire des parties ayant une unité sémantique. Le procédé décrit dans la demande FR02.13977, permet d'élaborer une segmentation de vidéos de sport selon plusieurs niveaux. Il existe également des procédés permettant d'extraire de manière automatique la structure arborescente d'un film ou d'une vidéo documentaire. Classiquement, la vidéo est découpée en plans en se basant sur des changements abrupts du contenu colorimétrique des images. Puis, les plans sont regroupés en scènes en se basant sur la ressemblance visuelle des contenus des plans et leur proximité temporelle. De manière générale, il est possible, pour un grand nombre de types de documents vidéo, de définir une structure arborescente possédant plusieurs niveaux.

Le document US 2006/0107289 décrit un appareil audiovisuel recevant des programmes audiovisuel et des données de service associées à ces programmes. L'appareil dispose de plusieurs moyens de réception de données provenant de divers réseaux : satellite, câble et terrestre, et d'un moyen de mémorisation des données reçues des réseaux. L'appareil affiche un guide électronique de programme (EPG) qui présente les divers documents enregistrés. Les documents se présente sous la forme d'imagettes (en Anglais « thumbnail ») qui est la première trame vidéo du document. Si la première image est noire, alors une autre image est recherchée. Ce document ne permet pas d'enrichir un sommaire en présentant à l'utilisateur autre chose que le titre et la première image d'un document.

Lorsque le document enregistré est un journal télévisé, l'indexation selon les procédés actuels va permettre d'accéder directement aux reportages. Les journaux télévisés débutent généralement par un sommaire au cours duquel les principaux reportages composant ce journal sont présentés. Dans le meilleur des cas, le guide utilisant le procédé d'indexation présente le sommaire comme un reportage et le présente comme tel à l'utilisateur. En effet, les images au cours du sommaire montrent le commentateur exposant oralement les différents reportages, un procédé d'indexation peu performant considérera que l'ensemble de ces images constitue une unité. Dans d'autres cas, le sommaire est découpé en plusieurs reportages. Dans tous les cas, les parties du journal sont montrées séparément et au même niveau de présentation, ce qui n'est pas satisfaisant puisque l'utilisateur voit bien que le journal est constitué d'un certain nombre de reportages sans indiquer si ce sont les vrais reportages ou les parties du sommaire. De plus, si des reportages ne sont pas présentés dans le sommaire, l'utilisateur a des difficultés pour le trouver facilement. La présente invention offre à l'utilisateur une interface particulièrement conviviale pour ce type de document, en permettant une navigation performante entre des reportages et des parties de sommaire.

L'invention a pour objet un procédé de création d'un nouveau sommaire introductif d'un document audiovisuel enregistré dans un appareil, caractérisé en ce qu'il comporte les étapes suivantes :
- découpage du document en deux parties, l'une étant le sommaire et l'autre composée d'une pluralité de reportages,
- découpage du sommaire en une pluralité de parties,
- recherche des associations entre une partie de sommaire et un reportage, et détection d'au moins un reportage non associé à une partie de sommaire,
- création d'un résumé pour au moins un reportage non associé à une partie de sommaire, à partir d'au moins une image d'une séquence audiovisuelle extraite dudit reportage,
- intégration du résumé ainsi créé dans le nouveau sommaire.

De cette façon, les reportages qui n'étaient pas représentés dans le sommaire, le deviennent dans le nouveau sommaire afin que l'utilisateur puisse naviguer dans un document audiovisuel et passer d'un résumé introductif à n'importe quel reportage contenu dans le document et associé à ce résumé. Le découpage du document en parties de sommaire et en reportages permet de proposer à l'utilisateur deux niveaux d'informations, un premier permettant de l'informer du sujet du reportage, le second étant le reportage lui-même.

Selon un premier perfectionnement, l'intégration du résumé ainsi créé dans le sommaire s'effectue en respectant l'ordre des reportages. De cette façon, l'utilisateur peut plus facilement suivre la structure du document. Selon un autre perfectionnement, la création du résumé consiste à extraire des séquences audiovisuelles possédant une caractéristique déterminée, par exemple, la présence de la silhouette d'un présentateur. De cette façon, les séquences du résumé ainsi créé ont un contenu informatif plus pertinent.

Selon un perfectionnement, pour un reportage donné, la création d'un résumé associé n'intervient que si la durée de ce reportage est supérieure à une valeur déterminée. De cette façon, le sommaire n'est pas encombré par des résumés associés à des reportages peu importants. Selon un perfectionnement, plusieurs reportages sont concaténés en une même séquence et cette séquence est associée à un résumé dont une partie au moins est créée localement. De cette façon, il est possible de limiter le nombre de résumés en rassemblant plusieurs reportages. Selon un perfectionnement, les reportages concaténés possèdent une caractéristique particulière telle que : une durée inférieure à une valeur déterminée, ou un thème particulier. De ce fait, le regroupement de plusieurs reportages pour réaliser un unique résumé associé a du sens pour l'utilisateur.

Selon un perfectionnement, au cours de la navigation, l'appareil affiche une indication visuelle au cours de la visualisation des parties de sommaires créées par l'appareil. De cette façon, l'utilisateur sait que ce résumé n'était pas dans le document initial mais a été créé par son appareil.

La présente invention concerne également un récepteur audiovisuel comprenant une unité centrale, un moyen de reproduction de parties au moins d'un document audiovisuel enregistré dans un moyen de stockage dudit document, un moyen de réception de commandes de sélection, ledit document comportant un sommaire découpé en une pluralité de parties et une pluralité de reportages ; caractérisé en ce qu'il comporte un moyen pour associer chaque partie du sommaire à un reportage, un moyen pour créer un résumé d'au moins un reportage non associé à une partie de sommaire, le résumé étant constitué d'au moins une image d'une séquence audiovisuelle extraite de ce reportage, le moyen pour mémoriser intégrant le résumé ainsi créé dans un nouveau sommaire du document, l'introduction d'une commande de sélection activé sur une partie de résumé ainsi créé déclenchant la reproduction du reportage correspondant.

D'autres caractéristiques et avantages de l'invention apparaîtront maintenant avec plus de détails dans le cadre de la description qui suit d'exemples de réalisation donnés à titre illustratif en se référant aux figures annexées qui représentent :
- la figure 1 est un diagramme bloc d'un récepteur audiovisuel pour la mise en oeuvre de l'invention,
- la figure 2 est un organigramme des principales étapes effectuées par le navigateur,
- les figures 3.a et 3.b sont des illustrations du découpage d'un document enregistré avant et après la création du nouveau résumé,
- la figure 4 est une apparence d'écran permettant la navigation dans le document préalablement segmenté et découpé.

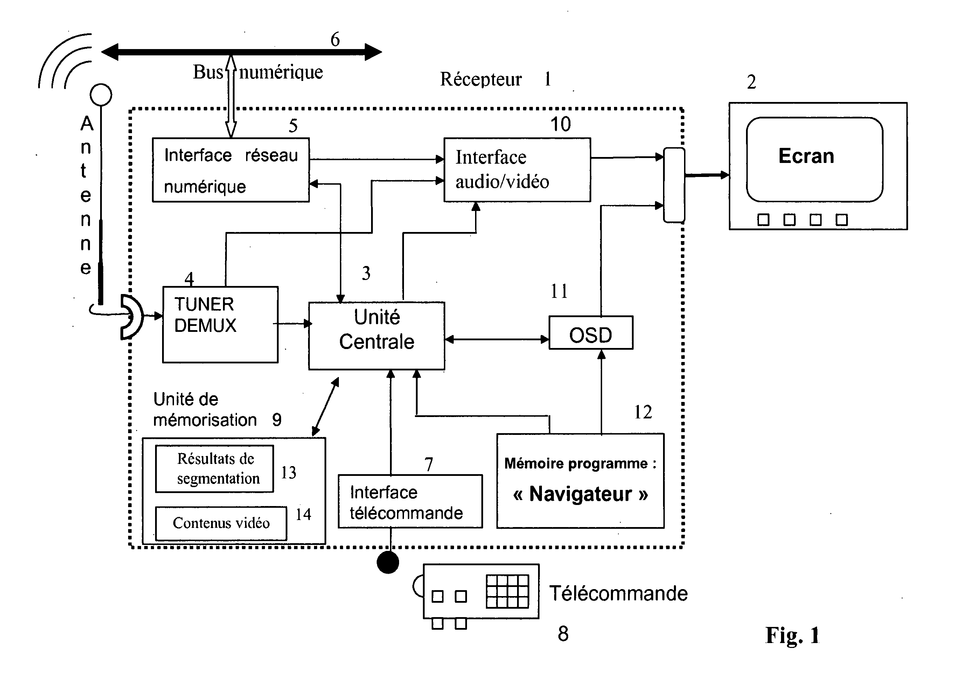

On décrira tout d'abord le fonctionnement d'un récepteur audiovisuel 1 muni d'un dispositif d'affichage 2. Le récepteur comprend une unité centrale 3 reliée à une mémoire de programme 12, et une interface 5 pour la communication avec un bus numérique local à haut débit 6 permettant de transmettre des données audio/vidéo en temps réel. Ce réseau est par exemple un réseau IEEE 1394. Le récepteur peut également recevoir des données audio/vidéo d'un réseau de diffusion à travers une antenne de réception associée à un démodulateur 4. Le récepteur comprend en outre un récepteur de signaux infrarouges 7 pour recevoir les signaux d'une télécommande 8, une mémoire 9 pour le stockage des données téléchargées, et une logique de décodage audio/vidéo 10 pour la génération des signaux audiovisuels envoyés à l'écran de télévision 2. Selon un exemple de réalisation, la mémoire 9 est un disque dur de grande capacité permettant d'enregistrer des documents audiovisuels. Selon un autre exemple de réalisation, le document audiovisuel est contenu dans un support amovible tel qu'un « compact disk » ou un disque DVD , le support étant inséré dans un périphérique lecteur (non représenté sur la figure 1) incorporé dans le récepteur. La télécommande est dotée des touches de direction ↑, ↓, → et ← et d'au moins une touche : « OK ». Selon un mode préféré de réalisation, les flèches de direction permettent de déplacer un curseur à l'écran, les commandes accessibles à l'utilisateur sont présentées sous forme d'icônes et sont activées lorsque l'utilisateur appuie sur « OK » avec le curseur positionné sur l'icône correspondant à la commande souhaitée.

Le récepteur comprend également un circuit 11 d'affichage de données sur l'écran, appelé souvent circuit OSD, de l'Anglais "On Screen Display" (signifiant littéralement "affichage sur l'écran"). Le circuit OSD 11 est un générateur de texte et de graphisme qui permet d'afficher à l'écran des menus, des pictogrammes (par exemple, un numéro correspondant à la chaîne visualisée) et qui permet d'afficher les menus de navigation conformément à la présente invention. Le circuit OSD est contrôlé par l'Unité Centrale 3 et un navigateur 12. Le navigateur 12 est avantageusement réalisé sous la forme d'un module de programme enregistré dans une mémoire morte. Il peut aussi être réalisé sous la forme d'un circuit spécialisé de type ASIC par exemple.

Le bus numérique 6 et/ou le réseau de diffusion transmettent au récepteur des données comprenant des documents audiovisuels. Eventuellement, ces documents sont associés à des données descriptives. Ces données proviennent soit d'un réseau de diffusion, soit du réseau numérique 6. Les données descriptives comprennent notamment des informations de segmentation définissant les différents segments du document. Avantageusement, les données descriptives permettent une décomposition fine du document et comportent du texte permettant de donner au moins un titres à chaque segment. Les données descriptives sont par exemple contenues dans les informations de service spécifiées par la norme DVB-SI, elles sont enregistrées dans la mémoire 9 du récepteur. Le navigateur les extrait pour animer la navigation.

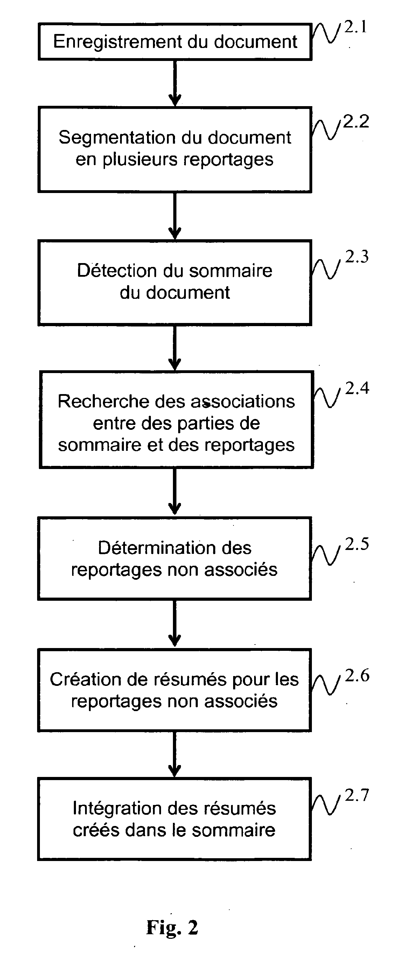

Après avoir présenté les principaux éléments, nous allons maintenant expliciter comment ceux-ci coopèrent. La figure 2 présente un organigramme des principales étapes selon un exemple de réalisation de l'invention. Dans un premier temps (étape 2.1), le document est téléchargé du réseau numérique 6 ou du réseau de diffusion et enregistré en mémoire 9. A un moment ou un autre, l'utilisateur indique que ce document comporte un sommaire et un ensemble de reportage. Typiquement, ce document est un journal télévisé, il peut aussi être un documentaire, un jeu composé de plusieurs épreuves ou, de façon générale, tout document vidéo ou audiovisuel comportant une pluralité de séquences présentées dans un sommaire inclus dans le document. Le fait de marquer le document déclenche l'exécution d'un programme conçu pour analyser le document et pour enrichir son sommaire.

Si le document n'est pas reçu avec ses données de segmentation, le programme les détermine en local à l'aide d'un module logiciel de segmentation qui localise dans le document les reportages et les parties de sommaire qui présentent ces reportages.

A l'étape 2.2, le document est segmenté en une pluralité de séquences de reportages. De nombreuses méthodes de la littérature proposent des solutions à ce problème. Par exemple, une technique possible consiste, suite à un découpage en plans de la vidéo à repérer les plans récurrents montrant une image déterminée, typiquement le présentateur du journal télévisé. Les différents plans présents entre les deux apparitions du présentateur sont regroupés au sein d'un même segment vidéo caractérisant un reportage. Dans un autre exemple, la séquence vidéo est découpée en plans, puis, les plans sont regroupés en scènes en se basant sur la ressemblance visuelle des contenus des plans et leur proximité temporelle. On peut observer la composante audio en analysant l'ambiance sonore (un reportage sur un match de football, ou sur un documentaire écologique, ou sur la dernière intervention d'un homme politique présentent des caractéristiques différentes), ou la continuité de la voix d'un même journaliste commentant son reportage. Les différents plans présents entre les deux apparitions du présentateur sont regroupés au sein d'un même segment vidéo caractérisant un reportage. Nous obtenons donc en sortie de ce module une liste de reportages ainsi qu'une liste de plans contenant le présentateur.

Typiquement, la similarité visuelle entre segments est évaluée en représentant chaque segment par un petit ensemble d'« images-clés » extraites du segment, et en évaluant une distance perceptuelle entre des attributs visuels de ces images. Les attributs utilisés peuvent par exemple être des distributions de couleurs dominantes ou des distributions de gradient. A la suite de ce premier traitement, le journal est segmenté en reportages, dont un est le sommaire.

Au cours de l'étape 2.3, le programme localise le sommaire dans le document et le découpe en parties présentant une identité visuelle. Une hypothèse consiste à considérer que le sommaire se trouve au début du journal télévisé (on peut également considérer l'autre hypothèse où le sommaire est rediffusé à la fin du journal afin de rappeler les grands titres). La recherche des images du sommaire peut s'opérer suivant différentes hypothèses, par exemple :
- les images du sommaire contiennent des vignettes rectangulaires généralement fixes en haut à gauche ou en bas à droite du présentateur
- le sommaire est diffusé au début du journal avant l'apparition du présentateur sous forme d'une succession de clips vidéo.

D'autres techniques de reconnaissance visuelle existent. Par exemple, une sélection de l'ensemble des plans précédant le premier reportage est d'abord effectuée. Sur l'ensemble de ces plans, une détection de vignettes est mise en oeuvre sur l'ensemble des images de chaque plan. Cette détection peut s'appuyer sur le fait que les vignettes apparaissent dans une partie de l'image, le reste de l'image demeurant quasi fixe. On peut utiliser par exemple un algorithme basé sur l'utilisation des images résultant de la différence entre images successives associée à une détection de forme rectangulaire par morphologie mathématique.

Si le sommaire est présent au début du document et que les images de reportages n'apparaissent pas en médaillon dans l'image mais en plein écran, il est possible d'utiliser une méthode de détection s'appuyant sur le fait que :
- le présentateur donne le résumé oral accompagnant le sommaire. Cela peut permettre d'utiliser une segmentation en locuteur puis de sélectionner les images où le présentateur parle mais n'est pas visible
- le sommaire est généralement compris entre le générique et la première apparition du présentateur. Dans ce cas là, la détection du générique s'appuyant sur une détection des plages de musique ou sur une connaissance a priori du générique permet de retrouver le sommaire comme étant tout ce qui n'est pas générique.

Selon une variante de fonctionnement, l'ordre d'exécution des étapes 2.2 et 2.3 est inversé. Au début de l'analyse du document enregistré, le récepteur recherche d'abord les similarités entre des images du document enregistré. Pour cela, le document est découpé en plan séquences, un plan séquence présentant une continuité visuelle. Les plans séquences sont ensuite comparés les uns avec les autres afin de calculer un niveau de similarité. Si ce niveau dépasse un seuil déterminé, les images ou plan séquence analysés sont associées deux à deux. La comparaison porte aussi bien sur des images que des parties d'images. En effet, un journal peut présenter le sommaire avec le présentateur en premier plan, et certaines images du reportage correspondant en médaillon. Le module de comparaison détecte dans l'image présente à l'écran l'existence d'un médaillon comportant une petite image et effectue la comparaison à l'aide de cette image.

A la suite de cette première étape d'évaluation des similitudes, le récepteur analyse la répartition des plans séquences présentant des plans séquences marqués par une similitude avec un autre plan séquence. Le récepteur détermine un groupe d'au moins un plan séquence possédant la plus forte concentration de similitudes avec d'autres plans séquences du document. Si ce groupe ne se situe pas au début ou à la fin du document enregistré, qui sont les places normales du sommaire, la méthode n'est pas applicable. Dans le cas contraire, l'ensemble des plans séquences qui compose le groupe constitue bien un sommaire, le reste du document étant considéré comme l'ensemble des reportages. Cette méthode peut notamment s'appliquer si le présentateur n'est pas présent dans les images du sommaire, et si les images du sommaire ne comportent pas de caractéristique particulière.

Une fois les reportages et le sommaire détectés, l'étape 2.4 permet de détecter les similitudes existant entre chaque portion du sommaire et chaque reportage. Une méthode consiste à comparer les images du sommaire avec les images des reportages. Des techniques classiques d'extraction d'attributs caractéristiques de l'image associée à une mesure de distance permettent de fournir une mesure de similarité permettant de remonter à l'association des images sommaires et reportages. Dans de nombreux cas, on peut considérer que le sommaire est constitué de résumés vidéo des reportages associés, l'invention pourra avantageusement utiliser la composante temporelle pour rendre le processus de mise en correspondance d'images plus robuste. Par exemple, l'ordre de présentation des reportages dans le sommaire est généralement le même que celui des reportages du journal. La mesure de similarité est ainsi renforcée si les deux images présentant des similitudes se présentent dans le même ordre, les unes étant dans le sommaire, les autres dans les reportages.

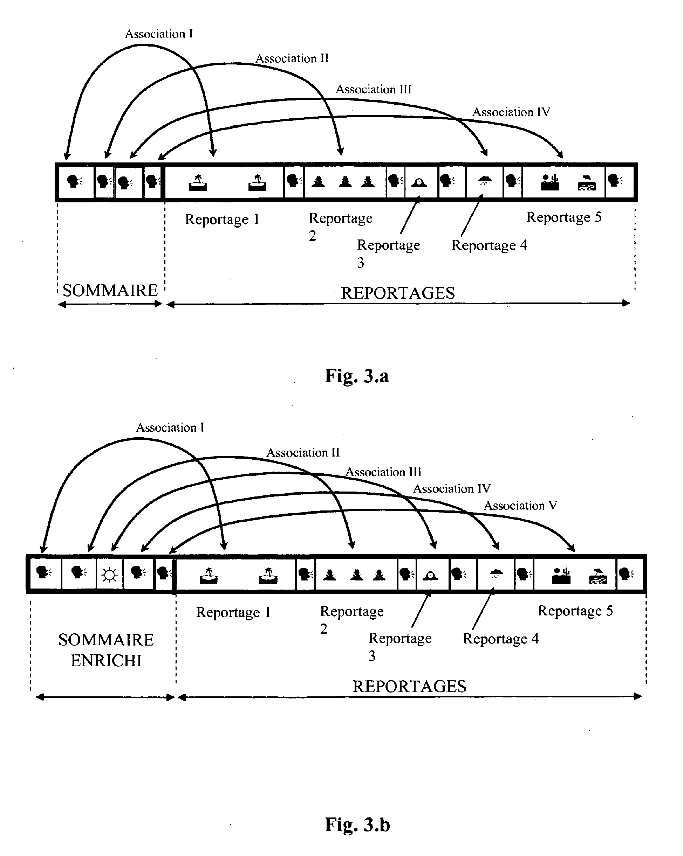

Le document est maintenant segmenté, les associations entre les parties de sommaire et les reportages sont réalisées. Au cours de l'étape 2.5, le programme teste si chaque reportage est présenté dans le sommaire. Pour cela, un tableau d'index du document est créé en mémoire 9 permettant d'indexer chaque élément du document, voici un exemple de tableau correspondant au document dont la chronologie du contenu est illustrée à la figure 3.a.

| Numéro de reportage | 1 | 2 | 3 | 4 | 5 |
|---|---|---|---|---|---|
| Index du reportage | 1'05" | 5'23" | 7'18" | 11'04" | 13'25" |
| Index dans le sommaire | 0'0" | 0'15" | --- | 0'30" | 0'48" |

Dans l'exemple ci-dessus, le reportage numéro 3 n'est pas présenté dans le sommaire. A la fin de l'étape 2.5, le programme a identifié tous les reportages qui ne sont pas associés à une partie de sommaire.

A l'étape 2.6, le programme élabore automatiquement un résumé, de préférence court, pour les reportages non associés à une partie du sommaire actuel. Pour ce faire, le programme sélectionne un certain nombre d'extraits du reportage (segments vidéo où images clé) qui sont concaténés dans une séquence audiovisuelle, ou vidéo. Selon un mode préféré de réalisation, la sélection d'extraits de reportage s'effectue en prenant quelques secondes de chaque plan du reportage. La durée de quelques secondes varie en analysant le contenu visuel et/ou audio du plan de reportage. Par exemple, le plan doit contenir la présence de visages, ou comporte des segments vidéo de moindre mouvement, etc.. Une autre façon de faire consiste à prendre uniquement les plans séquence du reportage comportant la silhouette du présentateur. Une autre façon de faire consiste à prendre uniquement les plans séquence du reportage ayant une forte puissance sonore, ce perfectionnement est utile notamment pour résumer des reportages sportifs.

A l'étape 2.7, le programme modifie le sommaire initial en y ajoutant les résumés créés automatiquement. Avantageusement, le contenu vidéo de ces résumés est marqué par une icône prévenant ainsi l'utilisateur que ces parties ont été localement rajoutées au document enregistré. De façon simple, l'ajout des résumés créés peut s'effectuer à la fin du sommaire actuel. Une variante consiste à rajouter les parties de sommaire ainsi créées dans l'ordre d'apparition des reportages à l'intérieur du document. Si les parties de sommaire n'étaient pas déjà dans le même ordre que les reportages, le résumé créé pour un reportage donné est placé après la partie de sommaire correspondant au précédent reportage dans le document. A la fin de l'étape 2.7, tous les résumés automatiques sont insérés dans le sommaire, lui-même dans le document. Le tableau d'index du document associe pour chaque reportage une partie de sommaire, voici un exemple de tableau correspondant au document dont la chronologie du contenu est illustrée à la figure 3.b.

| Numéro de reportage | 1 | 2 | 3 | 4 | 5 |
|---|---|---|---|---|---|
| Index du reportage | 1'25" | 5'43" | 7'38" | 11'24" | 13'45" |
| Index dans le sommaire | 0'0" | 0'15" | 0'30" | 0'50" | 1'08" |

On voit dans le tableau qu'un résumé d'une durée de 20 secondes est créé pour le reportage 3, de ce fait les parties suivantes du résumé et les reportages sont décalés de cette durée. Globalement, la durée du document enregistré est augmentée de la durée totale des résumés créés par le programme.

La figure 3.a illustre le découpage d'un document et la détermination des similitudes entre des parties de sommaire et des reportages. A la suite des étapes 2.2 et 2.3, le programme a déterminé que le document audiovisuel comporte un sommaire ayant quatre parties, suivi de cinq reportages. En analysant les similitudes entre les parties de sommaire et les reportages au cours de l'étape 2.4, le programme a pu établir quatre associations entre des parties de sommaire et des reportages : la première partie du sommaire et le premier reportage, la seconde partie du sommaire et le second reportage, la troisième partie du sommaire et le quatrième reportage et la quatrième partie du sommaire avec le cinquième reportage. Le programme a déterminé au cours de l'étape 2.5 que le troisième reportage n'est pas présenté dans le sommaire. Selon le procédé décrit précédemment, le programme élabore automatiquement un résumé du troisième reportage au cours de l'étape 2.6. Suite à cette création et à son incorporation dans le sommaire à l'étape 2.7, la figure 3.b illustre le découpage du document avec cinq parties de résumé, chacune étant associée à un des cinq reportages.

Selon un perfectionnement, pour un reportage donné, la création d'un résumé associé n'intervient que si la durée dudit reportage est supérieure à une durée déterminée. En effet, un journal contient généralement des reportages de faits divers peu importants qui sont relatés en un temps très courts. De ce fait, la création d'un résumé encore plus court n'a guère de sens, de plus on peut considérer que l'importance de ces reportages ne justifie pas leur introduction dans le sommaire. De sorte que, pour un reportage d'une durée inférieure à une valeur donnée, typiquement 15 secondes, le programme ne crée pas de résumé. Selon un perfectionnement, les reportages de courte durée sont chaînés et concaténés les uns à la suite des autres. De cette façon, même si ces reportages sont disséminés au sein du document entre des reportages ayant une durée plus longue, ils pourront être sélectionnés et visualisés les uns à la suite des autres par la même commande. L'ensemble des reportages courts est associé à une page d'écran, affichant par exemple un texte générique tel que « Fait divers ». L'utilisateur en activant cette page déclenche la visualisation de l'ensemble des reportages courts.

Le critère de sélectionner des reportages d'une durée courte pour les associer à un résumé donné n'est donné qu'à titre d'exemple. Il est également possible de déterminer le thème de reportages non référencés dans le sommaire et de regrouper des reportages d'un même thème, le sport par exemple, en les associant à une même partie de sommaire. Cette partie de sommaire peut déjà exister dans le document d'origine, le programme y rajoute une séquence vidéo affichant par exemple le nom du thème.

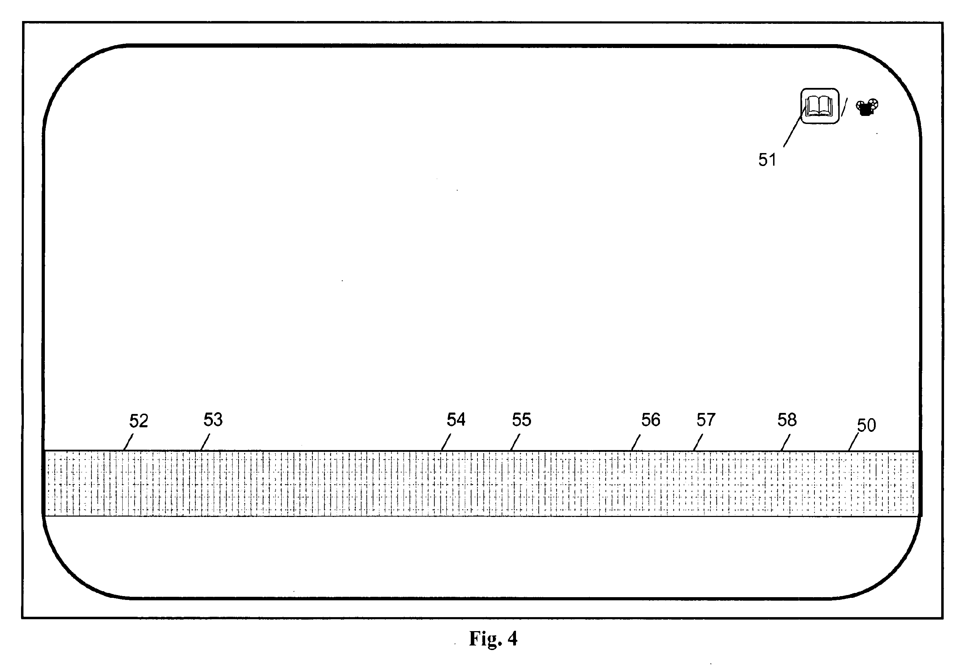

L'utilisateur peut maintenant naviguer dans le document et passer facilement d'une partie de sommaire au reportage associé et réciproquement. Une interface utilisateur permet cette navigation au sein du document. La figure 4 présente une apparence d'écran pour la navigation au sein d'un document vidéo préalablement segmenté et dont les liens de navigation entre les reportages et les parties de sommaire ont été établis.

La figure 4 montre un exemple d'écran lors de la visualisation d'un document vidéo enregistré. Le contenu vidéo apparaît en fond d'écran et un bandeau de commande 50 en bas de l'écran. Une icône 51 en forme de livre 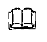 apparaît pour indiquer que le contenu vidéo affiché est extrait du sommaire, une icône en forme de caméra : 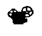 apparaît pour indiquer que le contenu vidéo est extrait de la partie reportage du journal. Le bandeau contient les icônes de commande suivantes, proposées à l'utilisateur :
- Echange sommaire / reportage correspondant (52).
- Retour au début du sommaire ou des reportages (53).
- Saut à l'extrait de sommaire ou au reportage précédent (54).
- Saut à l'extrait de sommaire ou au reportage suivant (55).
- Arrêt sur image (56).
- Visualisation vitesse normale/ralenti (57).
- Mode continu / reportage par reportage (58).

La première commande 52 permet en visualisant un extrait de sommaire de visualiser le reportage correspondant. Par défaut, c'est le sommaire qui est visualisé. S'il n'introduit aucune commande, l'utilisateur peut rapidement connaître le sujet des principaux reportages composant le journal.

La commande 58 permet de visualiser le reportage ou l'extrait de sommaire et de reprendre ou non la visualisation du sommaire. Par défaut, c'est le mode continu : lorsque l'utilisateur a activé la commande 52 pour visualiser le reportage correspondant, ce reportage ainsi que les suivants sont visualisés jusqu'à la fin du journal. Si l'utilisateur active le mode reportage / reportage, alors lorsque le reportage dont la visualisation a été déclenchée par l'activation de l'icône 52 est terminé, la visualisation du sommaire continue en visualisant la prochaine partie du sommaire.

A l'aide de cette interface, l'utilisateur peut naviguer d'un extrait à un autre extrait en sautant de parties de sommaire au reportage correspondant si le sujet l'intéresse. Le procédé n'a donc pas besoin de traiter les images pour en modifier l'aspect ou de créer d'autres images à partir de celles reçues, de cette façon l'appareil n'utilise pas une grosse puissance de calcul.

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'Homme du métier.

## Revendications

1. Procédé de création d'un nouveau sommaire introductif d'un document audiovisuel comportant un sommaire et des reportages enregistré dans un appareil, **caractérisé en ce qu'**il comporte les étapes suivantes :
- découpage (2.2) du document en deux parties, l'une étant le sommaire et l'autre composée d'une pluralité de reportages,
- découpage (2.3) du sommaire en une pluralité de parties,
- recherche (2.4) des associations entre une partie de sommaire et un reportage, et détection (2.5) d'au moins un reportage non associé à une partie de sommaire,
- création (2.6) d'un résumé pour au moins un reportage non associé à une partie de sommaire, à partir d'au moins une image d'une séquence audiovisuelle extraite dudit reportage,
- intégration (2.7) du résumé ainsi créé dans le sommaire pour former le nouveau sommaire introductif.

2. Procédé de création d'un nouveau sommaire selon la revendication 1 ; **caractérisé en ce que** l'intégration du résumé ainsi créé dans le sommaire s'effectue en respectant l'ordre des reportages.

3. Procédé de création d'un nouveau sommaire selon l'une quelconque des revendications 1 ou 2 ; **caractérisé en ce que** la création du résumé consiste à extraire au moins une image d'une séquence audiovisuelle, ladite image possédant une caractéristique déterminée, tel que la présence de la silhouette d'un présentateur.

4. Procédé de création d'un nouveau sommaire selon l'une quelconque des revendications 1 à 3 ; **caractérisé en ce que**, pour un reportage donné, la création d'un résumé associé n'intervient que si la durée dudit reportage est supérieure à une durée déterminée.

5. Procédé de création d'un nouveau sommaire selon l'une quelconque des revendications 1 à 4 ; **caractérisé en ce qu'**il comporte une étape de concaténation de plusieurs reportages en une même séquence, cette séquence étant associée à un résumé dont une partie au moins est créée localement.

6. Procédé de création d'un nouveau sommaire selon la revendication 5 ; **caractérisé en ce que** les reportages concaténés possèdent une caractéristique particulière telle qu'une durée inférieure à une valeur déterminée, ou un thème particulier.

7. Procédé de création d'un nouveau sommaire selon l'une quelconque des revendications précédentes ; **caractérisé en ce qu'**il comporte une étape d'affichage d'une indication visuelle au cours de la visualisation d'une partie de sommaire indiquant que cette partie de sommaire a été créée localement.

8. Récepteur audiovisuel comprenant une unité centrale (3), un moyen de reproduction (10) de parties au moins d'un document audiovisuel enregistré dans un moyen de stockage (9) dudit document, un moyen de réception de commandes de sélection (7, 8), ledit document comportant un sommaire découpé en une pluralité de parties et une pluralité de reportages ; **caractérisé en ce qu'**il comporte un moyen pour associer chaque partie du sommaire à un reportage, un moyen pour créer (3, 12) un résumé d'au moins un reportage non associé à une partie de sommaire, le résumé étant constitué d'au moins une image d'une séquence audiovisuelle extraite de ce reportage, le moyen pour mémoriser (9) intégrant le résumé ainsi créé dans le sommaire du document pour créer un nouveau sommaire du document, l'introduction d'une commande de sélection activé sur une partie de résumé ainsi créé déclenchant la reproduction du reportage correspondant.

9. Récepteur audiovisuel selon la revendication 8 ; **caractérisé en ce que** le moyen pour mémoriser (9) intègre le résumé du reportage dans le nouveau sommaire en respectant l'ordre des reportages.

10. Récepteur audiovisuel selon la revendication 8 ou 9; **caractérisé en ce que** le moyen pour créer (3, 12) un résumé d'un reportage non associé à une partie de sommaire consiste à extraire au moins une image d'une séquence audiovisuelle, ladite image possédant une caractéristique déterminée, tel que la présence de la silhouette d'un présentateur.

11. Récepteur audiovisuel selon l'une des revendications 8 à 10; **caractérisé en ce que**, pour un reportage donné, la création d'un résumé associé n'intervient que si la durée dudit reportage est supérieure à une durée déterminée.

12. Récepteur audiovisuel selon l'une des revendications 8 à 11; **caractérisé en ce que** le moyen pour mémoriser (9) intègre un résumé associé à plusieurs reportages, l'introduction d'une commande de sélection activant la reproduction desdits plusieurs reportages.

13. Récepteur audiovisuel selon la revendication 12 ; **caractérisé en ce que** les reportages associé à un seul résumé possèdent une caractéristique particulière telle qu'une durée inférieure à une valeur déterminée, ou un thème particulier.

14. Récepteur audiovisuel selon l'une quelconque des revendications 8 à 13 ; **caractérisé en ce qu'**il comporte un moyen d'affichage affichant une partie du nouveau sommaire et une indication visuelle indiquant que cette partie de sommaire a été créée localement.

## Claims

1. Method for creating a new introductory roundup of an audiovisual document recorded in a device comprising a roundup and reports, **characterized in that** it comprises the following steps:
- dividing (2.2) the document into two parts, one being the roundup and the other composed of a plurality of reports,
- dividing the (2.3) roundup into a plurality of parts,
- searching (2.4) for associations between one roundup part and a report, and detection (2.5) of at least one report not associated with a roundup part,
- creation (2.6) of a summary for at least one report not associated with a roundup part, from at least one picture of an audiovisual sequence extracted from said report,
- integration (2.7) of the summary thus created in the roundup to form the new introductory roundup.

2. Method for creating a new roundup according to claim 1, **characterized in that** the integration of the summary thus created in the roundup is carried out by respecting the order of the reports.

3. Method for creating a new roundup according to any one of claims 1 or 2, **characterized in that** the creation of the summary consists in extracting at least one picture of an audiovisual sequence, said picture having a determined characteristic, such as the presence of the outline of a presenter.

4. Method for creating a new roundup according to any one of claims 1 to 3, **characterized in that** for a given report, the creation of an associated summary only occurs if the duration of said report is greater than a determined duration.

5. Method for creating a new roundup according to any one of claims 1 to 4, **characterized in that** it comprises a concatenation step of several reports into a same sequence, this sequence being associated with a summary for which at least one part is created locally.

6. Method for creating a new roundup according to claim 5, **characterized in that** the concatenated reports have a particular characteristic such as a duration less than a determined value, or a particular theme.

7. Method for creating a new roundup according to any one of the aforementioned claims, **characterized in that** it comprises a step for displaying a visual indication during the viewing of a roundup part indicating that this roundup part was created locally.

8. Audiovisual receiver comprising a central processing unit (3), a reproduction means (10) of parts at least of an audiovisual document recorded in a storage means (9) of said document, a reception means of selection commands (7, 8), said document comprising a roundup divided into a plurality of parts and a plurality of reports, **characterized in that** it comprises a means for associating each part of the roundup with a report, a means for creating (3, 12) a summary of at least one report not associated with a roundup part, the summary being constituted by at least one picture of an audiovisual sequence extracted from this report, the means for storing (9) integrating the summary thus created in the roundup of the document to create a new roundup of the document, the introduction of a selection command activated on a roundup part thus created triggering the reproduction of the corresponding report.

9. Audiovisual receiver according to claim 8, **characterized in that** the storage means (9) integrates the summary of the report in the new roundup while respecting the order of the reports.

10. Audiovisual receiver according to claim 8 or 9, **characterized in that** the means for creating (3, 12) a summary of a report not associated with a roundup part consists in extracting at least one picture of an audiovisual sequence, said picture having a determined characteristic, such as the presence of the outline of a presenter.

11. Audiovisual receiver according to one of claims 8 to 10, **characterized in that**, for a given report, the creation of an associated summary only occurs if the duration of said report is greater than a determined duration.

12. Audiovisual receiver according to one of claims 8 to 10, **characterized in that** the storage means (9) integrates a summary associated with several reports, the introduction of a selection command activating the reproduction of said several reports.

13. Audiovisual receiver according to claim 12, **characterized in that** the reports associated with a single summary have a particular characteristic such as a duration less than a determined value, or a particular theme.

14. Audiovisual receiver according to any one of claims 8 to 13, **characterized in that** it comprises a display means displaying a part of the new roundup and a visual indication indicating that this roundup part was created locally.

## Patentansprüche

1. Verfahren zur Erzeugung einer neuen einleitenden Inhaltsübersicht eines audiovisuellen Dokumentes, das eine Inhaltsübersicht und Berichterstattungen umfasst und das in einem Gerät gespeichert ist, **dadurch gekennzeichnet, dass** es die nachfolgenden Schritte umfasst:
- Aufteilung (2.2) des Dokumentes in zwei Teile, wobei ein Teil aus der Inhaltsübersicht besteht und der andere aus einer Vielzahl von Berichterstattungen zusammengesetzt ist,
- Aufteilung (2.3) der Inhaltsübersicht in eine Vielzahl von Teilen,
- Suche (2.4) nach Verbindungen zwischen einem Teil der Inhaltsübersicht und einer Berichterstattung und Erfassen (2.5) von mindestens einer nicht mit einem Teil der Inhaltsübersicht verbundenen Berichterstattung,
- Erzeugung (2.6) einer Zusammenfassung für mindestens eine nicht mit einem Teil der Inhaltsübersicht verbundenen Berichterstattung, ausgehend von mindestens einem Bild einer audiovisuellen Sequenz, das aus der Berichterstattung extrahiert wird,
- Integration (2.7) der auf diese weise in der Inhaltsübersicht erzeugten zusammenfassung, um eine neue einleitende Inhaltsübersicht zu bilden.

2. Verfahren zur Erzeugung einer neuen Inhaltsübersicht nach Anspruch 1, **dadurch gekennzeichnet, dass** die Integration der auf diese Weise erzeugten Zusammenfassung in die Inhaltsübersicht durchgeführt wird, indem die Reihenfolge der Berichterstattungen berücksichtigt wird.

3. Verfahren zur Erzeugung einer neuen Inhaltsübersicht nach irgendeinem der Ansprüche 1 oder 2, **dadurch gekennzeichnet, dass** die Erzeugung der Zusammenfassung daraus besteht, mindestens ein Bild aus einer audiovisuellen Sequenz zu extrahieren, wobei das Bild eine bestimmte Eigenschaft besitzt, wie beispielsweise das Vorhandensein der Silhouette eines Moderators.

4. Verfahren zur Erzeugung einer neuen Inhaltsübersicht nach irgendeinem der Ansprüche 1 bis 3, **dadurch gekennzeichnet, dass**, für eine gegebene Berichterstattung, die Erzeugung einer verbundenen Zusammenfassung nur erfolgt, wenn die Dauer der Berichterstattung länger als eine bestimmte Dauer ist.

5. Verfahren zur Erzeugung einer neuen Inhaltsübersicht nach irgendeinem der Ansprüche 1 bis 4, **dadurch gekennzeichnet, dass** es einen Schritt zur Verkettung von mehreren Berichterstattungen zu einer einzigen Sequenz umfasst, wobei diese Sequenz mit einer Zusammenfassung verbunden ist, von der mindestens ein Teil lokal erzeugt wird.

6. Verfahren zur Erzeugung einer neuen Inhaltsübersicht nach Anspruch 5, **dadurch gekennzeichnet, dass** die verketteten Berichterstattungen eine besondere Eigenschaft besitzer, wie beispielsweise eine Dauer, die unter einem bestimmten Wert liegt, oder ein besonderes Thema.

7. Verfahren zur Erzeugung einer neuen Inhaltsübersicht nach irgendeinem der vorhergehenden Ansprüche, **dadurch gekennzeichnet, dass** es einen Anzeigeschritt eines visuellen Hinweises im Verlaufe der Darstellung eines Teiles der Inhaltsübersicht umfasst, der anzeigt, dass dieser Teil der Inhaltsübersicht lokal erzeugt wurde.

8. Audiovisuelles Empfangsgerät, aufweisend eine zentrale Feinheit (3), ein Wiedergabemittel (10) von Teilen von mindestens einem audiovisuellen Dokument, das in einem Speichermittel (9) für dieses Dokument aufgezeichnet ist, ein Empfangsmittel von Auswahlbefehlen (7, 8), wobei das Dokument eine Inhaltsübersicht umfasst, die in eine Vielzahl von Teilen und eine Vielzahl von Berichterstattungen aufgeteilt ist, **dadurch gekennzeichnet, dass** es ein Mittel umfasst, um jeden Teil der Inhaltsübersicht mit einer Berichterstattung zu verbinden, ein Mittel, um eine Zusammenfassung (3, 12) von mindestens einer nicht mit einem Teil der Inhaltsübersicht verbundenen Berichterstattung zu erzeugen, wobei die Zusammenfassung aus mindestens einem Bild einer audiovisuellen Sequenz besteht, das aus dieser Berichterstattung extrahiert wird, wobei das Mittel zum Speichern (9) die auf diese weise erzeugte Zusammenfassung in die Inhaltsübersicht des Dokumentes integriert, um eine neue Inhaltsübersicht des Dokumentes zu erzeugen, wobei die Eingabe eines Auswahlbefehles, der für einen Teil der auf diese Weise erzeugten Zusammenfassung aktiviert wird, die Wiedergabe der entsprechenden Berichterstattung auslöst.

9. Audiovisuelles Empfangsgerät nach Anspruch 8, **dadurch gekennzeichnet, dass** das Mittel zum Speichern (9) die Zusammenfassung der Berichterstattung in die neue Inhaltsübersicht integriert, indem die Reihenfolge der Berichterstattungen berücksichtigt wird.

10. Audiovisuelles Empfangsgerät nach Anspruch 8 oder 9, **dadurch gekennzeichnet, dass** das Mittel zum Erzeugen (3, 12) einer Zusammenfassung einer nicht mit einem Teil der Inhaltsübersicht verbundenen Berichterstattung daraus besteht, mindestens ein Bild aus einer audiovisuellen Sequenz zu extrahieren, wobei das Bild eine bestimmte Eigenschaft besitzt, wie beispielsweise das Vorhandensein der Silhouette eines Moderators.

11. Audiovisuelles Empfangsgerät nach irgendeinem der Ansprüche 8 bis 10, **dadurch gekennzeichnet, dass**, für eine gegebene Berichterstattung, die Erzeugung einer verbundenen Zusammenfassung nur erfolgt, wenn die Dauer der Berichterstattung länger als eine bestimmte Dauer ist.

12. Audiovisuelles Empfangsgerät nach einem der Ansprüche 8 bis 11, **dadurch gekennzeichnet, dass** in dem Mittel zum Speichern (9) eine mit mehreren Berichterstattungen verbundene Zusammenfassung integriert ist, wobei durch die Eingabe eines Auswahlbefehles die Wiedergabe von mehreren Berichterstattungen aktiviert wird.

13. Audiovisuelles Empfangsgerät nach Anspruch 12, **dadurch gekennzeichnet, dass** die mit einer einzigen Zusammenfassung verbundenen Berichterstattungen eine besondere Eigenschaft besitzen, wie beispielsweise eine Dauer, die unter einem bestimmten Wert liegt, oder ein besonderes Thema.

14. Audiovisuelles Empfangsgerät nach irgendeinem der Ansprüche 8 bis 13, **dadurch gekennzeichnet, dass** es ein Anzeigemittel umfasst, welches einen Teil der neuen Inhaltsübersicht anzeigt und einen visuellen Hinweis, der anzeigt, dass dieser Teil der Inhaltsübersicht lokal erzeugt wurde.
